# EUROPÄISCHE PATENTANMELDUNG

(11) **EP 2 769 911 A2**
(43) Veröffentlichungstag der Anmeldung: **27.08.2014**
(21) Anmeldenummer: 14000612.3
(22) Anmeldetag: 21.02.2014
(51) Int. Cl.: B64C 3/18, B64C 3/30, B64C 3/58, B64C 31/028, B63H 9/06

(54) **Zerlegbarer Flügelholm für insbesondere ebenfalls zerlegbare Tragflächen oder flügelähnliche aerodynamische Gegenstände**

(30) Priorität: 22.02.2013 AT 1342013
(71) Anmelder: Kotschnig, Herbert, 9020 Klagenfurt (AT)
(72) Erfinder: Kotschnig, Herbert, 9020 Klagenfurt (AT)
(74) Vertreter: Itze, Peter

(57) **Zusammenfassung**

Die gegenständliche Erfindung bezieht sich auf die Konstruktion von zerlegbaren Tragflächen, Flügeln und sonstigen aerodynamischen Gegenständen wie Rotorblätter für Fluggeräte oder Windkraftanlagen mit einer Bespannung (1, 2) aus vorgefertigtem, flexiblem Oberflächenmaterial wie Folien oder Geweben, deren Stabilität durch den im Inneren der Tragfläche verlaufenden Flügelholm (5, 6, 7) sichergestellt wird.

Kern der Erfindung ist ein zerlegbarer Flügelholm aus flexiblen Materialien, bestehend mindestens aus einem im Inneren des Flügels über die gesamte Spannweite in Ebene der resultierenden aerodynamischen Kräfte befindlichen flexiblen, in Zugrichtung festen flächigen Spannorgan (7) aus Folie, Gewebe od. dgl., welches an der Oberseite des Flügels und an der Unterseite des Flügels mit entlang der Flügellängsachse eingebrachten, drucksteifen und biegeelastischen Längsstreben (5, 6), wie Stäben, Latten od. dgl., verbunden und in dieser Ebene aufgespannt ist.

## Beschreibung

Die gegenständliche Erfindung bezieht sich auf die Konstruktion von zerlegbaren Tragflächen, Flügeln und sonstigen aerodynamischen Gegenständen aus vorgefertigten Folien oder Geweben, deren Stabilität durch den im Inneren der Tragfläche verlaufenden Flügelholm sichergestellt wird.

Tragflächen und Flügel sind aerodynamische Formen, welche bei gerichteter Anströmung des sie umgebenden Mediums eine senkrecht zur Anströmung wirkende Auftriebskraft erzeugen. Tragflächen aus flexiblem Oberflächenmaterial wie z.B. aus Folien, Tuch oder luftundurchlässigem Gewebegitter werden unter anderem für Tragflügel bei Leichtflugzeugen, bei Antrieben von Segelfahrzeugen oder für Rotorblätter von Windkraftanlagen eingesetzt.

Für die Steifigkeit und damit die Stabilität der Tragfläche sorgen Träger wie Balken, Rohre oder Holme. Beim Zusammenbau des Flügels bzw. bei der Aufstellung der Anlage wird das vorgefertigte, flexible und faltbare Oberflächenmaterial als Bespannung über die stabile Anordnung von Längs- und Querverstrebüngen fixiert.

Der Aufbau von zerlegbaren Tragflächen, Flügeln oder Rotorblättern aus faltbarem Oberflächenmaterial einerseits und einem stabilen Trägersystem andererseits ermöglicht eine leichte Bauweise bei reduziertem Pack- und Transportmaß.

Ein Vorteil von Tragflächen aus flexiblem Oberflächenmaterial liegt in ihrer einfachen Produktionsweise und ihrer vielfältigen Formgebung durch Vernähen, Verschweißen oder Verkleben des Materials. Das Material hat ein geringes Gewicht und kann leicht gefaltet oder gerollt werden. Damit ist Transport und Aufstellung dieser Tragflächen leicht zu realisieren. Ein wesentlicher Nachteil von Tragflächen aus flexiblem Oberflächenmaterial ist die fehlende Biegefestigkeit des Materials senkrecht zur Oberfläche. Daher müssen Tragflächen aus flexiblem Oberflächenmaterial zur Aufrechterhaltung ihrer Formstabilität versteift, verspannt, abgestützt oder sonst wie fixiert werden.

Die gemäß dieser Erfindung vorgeschlagene Anordnung des tragenden Teils der Tragfläche aus einem Spannorgan aus flexiblem Folienmaterial und aus biegeelastischen Streben im Inneren der Tragfläche ersetzt den üblichen starren Flügelholm als zentralen Längsträger der Tragfläche.

### Bisheriger Stand der Technik

Ein erstes Konstruktionsprinzip für zerlegbare Tragflächen ist der Aufbau des Flügels über ein Gerippe im Inneren der Tragfläche, bestehend aus einem oder mehreren Längsträgern entlang der Flügelspannweite und aus Rippen bzw. Spanten zur Generierung des Flügelprofils entlang der Profilsehne des Flügels in Richtung der aerodynamischen Hauptströmung am Flügel. Über das zusammensteckbare Gerippe ist ein luftundurchlässiges, meist flexibles und damit faltbares Obermaterial als Bespannung fixiert.

Zur Aufrechterhaltung der aerodynamischen Funktion müssen die Längsträger starr sein beziehungsweise nur mit einer sehr geringen Flexibilität ausgestattet sein. Dies wird mit Materialien realisiert, welche eine hohe Biegesteifigkeit aufweisen.

In Patent FR 2568217 sind zwei starre Längsträger als Duraluminium-Rohre im Zentrum des Flügels in Linie der Profilsehne parallel angebracht und ergeben in dieser Anordnung den Flügelholm. Ein Flügelholm mit leichten, biegeelastischen Streben wie mit der gegenständlichen Erfindung vorgeschlagen kann mit dieser Anordnung aber nicht realisiert werden.

In Patent FR 2309400 ist ein getrenntes Packmaß für das flexible Oberflächenmaterial und das zusammensteckbare Gerippe beschrieben. Der einzige Längsträger des Gerippes kann sich in Grenzen an die Bespannung anpassen, weist also eine geringfügige Flexibilität/Biegeelastizität auf. Die wesentlichen aerodynamischen Kräfte müssen in der Ausführung gemäß Patent FR 2309400 allerdings vom starren oder fast starren Längsträger aufgenommen werden. Ein Flügel mit einem Flügelholm aus leichten, biegeelastischen Längsstreben wie mit der gegenständlichen Erfindung vorgeschlagen würde dort in seiner Funktion versagen.

In Patent US 4198019 ist ein symmetrischer Flügel aus Holmen und Spieren beschrieben, wobei der Längsträger im Frontbereich vor der Auftriebs-Drucklinie des Flügels angebracht ist. Dieser Längsträger in Patent US 4198019 ist starr oder fast starr und besteht nur aus einem Material (z.B. Rundstab). Durch eine geringe Biegeelastizität der Längsspiere / des Längsträgers kann der Flügel seine Form bei verschiedenen Fluglagen und aerodynamischen Belastungen geringfügig ändern und so im Flug stabil bleiben. Der Längsträger ist aber dennoch soweit starr, dass die aerodynamische Funktion des Flügels erhalten bleibt. Ein Längsträger aus biegeelastischen Materialien wie in der gegenständlichen Erfindung vorgeschlagen könnte ohne besondere Vorrichtungen diese Funktion nicht erfüllen.

Ein zweites Konstruktionsprinzip für zerlegbare Tragflächen sind Schläuche aus flexiblem, luftundurchlässigen Material, die durch geeignete Formgebung der Schläuche die gewünschte Flügelform nach Füllung mit einem Gas ergeben, durch den Gasdruck die erforderliche Stabilität erlangen und dabei mit Aussteifungen versehen sein können.

Ein Beispiel ist in Patent US 4725021 beschrieben, in welchem zwei aufblasbare Schläuche geeignet miteinander verbunden sind und den Flügelholm der Tragfläche ergeben. Druck- und Zugkräfte werden dabei durch den unter Druck stehenden Schlauch aufgenommen. Eine Verformung der Schläuche entlang der Zug- und Druckkräfte kann nur durch Verringerung des Schlauchvolumens erfolgen. Während dem gesamten Einsatz als aerodynamische Wirkfläche muss der Gasdruck in den Schläuchen aufrecht erhalten bleiben. Verstärkungsglieder können zwar zusätzlich für Steifigkeit des Flügelholms sorgen, die wesentlichen Trageeigenschaften werden allerdings durch die unter Druck stehenden Schläuche aufgenommen. In der gegenständlichen Erfindung werden die wesentlichen Trageeigenschaften des Holms von einem flächigen Spannorgan getragen, aufblasbare Schläuche können zwecks Verbesserung der Trageeigenschaften zusätzlich eingebracht sein, sind für die Wirkungsweise der Konstruktion aber nicht essentiell.

Ein Beispiel für einen aufblasbaren und sich danach verfestigenden, versteifenden Flügel gibt Patent US 2005151007. Durch Einleitung eines Gases in vorgefertigte Schläuche wird das Flügelprofil aufgebaut, in dem das Gas umgebenden Raum wird ein formbares Material eingebracht, welches nach physikalischen oder chemischen Prozessen aushärtet. Das ausgehärtete Material im Inneren des Flügels wirkt als Flügelholm. Allerdings kann der Flügel nach seinem Einsatz nicht mehr leicht zerlegt und mit geringem Volumen gepackt werden, kann also weder als zerlegbarer Flügel noch als zerlegbarer Flügelholm erachtet werden.

Beim ersten Konstruktionsprinzip u.a. in FR 2568217, FR 2309400 oder US 4198019 ist der Flügelholm bereits vor seinem Einbau in die Tragfläche steif oder besteht aus biegesteifen Materialien. Wenn der Flügelholm dagegen aus biegeelastischen Materialien so aufgebaut ist, dass er vor seinem Einsatz durch zusätzliche mechanische Vorrichtungen steif gemacht wird, kann neben dem reduzierten Gewicht der Tragfläche auch noch ein geringeres Pack- und Transportmaß erreicht werden, und der Flügelholm ist nach seinem Einsatz wieder vom Flügel trennbar und zerlegbar.

Beim zweiten Konstruktionsprinzip u.a. in US 4725021 oder US 2005151007 wird der Flügelholm durch Aufblasen von Schläuchen steif gemacht. Wenn der Flügel zerlegbar sein soll, muss das Schlauchmaterial so robust sein, dass es während dem gesamten Einsatz dem hohen Druck standhält. Beim Zusammenbau der Tragfläche muss das Gas unter Druck in die Schläuche gebracht werden, was die Einsatzmöglichkeiten dieser Bauweise einschränkt.

### Beschreibung der Erfindung

Anhand der beiliegenden Zeichnungen wird die vorliegende Erfindung näher erläutert. Es zeigt:
Figur 1: Schema einer Tragfläche mit Flügelholm aus Längsstreben und Spannorgan
Figur 2: einen Längsschnitt nach Linie A-A der Fig. 3
Figur 3: einen Querschnitt nach Linie B-B der Fig. 2
Figur 4: einen Längsschnitt analog Fig. 2 durch eine Ausführungsform mit Flügelholm aus Längsstreben und Spannorgan mit Aussteifungsstücken
Figur 5: einen Querschnitt analog Fig. 3 durch die Ausführungsform gemäß Fig. 4
Figur 6: einen Längsschnitt analog Fig. 2 durch eine Ausführungsform mit Flügelholm aus Längsstreben und Spannorgan mit zusätzlichen parallelen Streben Figur 7: einen Querschnitt analog Fig. 3 durch die Ausführungsform gemäß Fig. 6
Figur 8: einen Querschnitt analog Fig. 3 mit Flügelholm aus Längsstreben und Spannorgan mit in jeweils zwei parallel angeordnete Einzelstreben aufgeteilten Längsstreben
Figur 9: einen Querschnitt analog Fig. 3 mit Flügelholm aus Längsstreben und Spannorgan mit aufblasbaren längsverlaufenden Schläuchen
Figur 10: einen Querschnitt analog Fig. 3 mit einem Kastenprofil zusammengesetzt aus zwei durch zusätzliche Verbindungsorgane verbundenen Flügelholmen aus Längsstreben und Spannorgan.

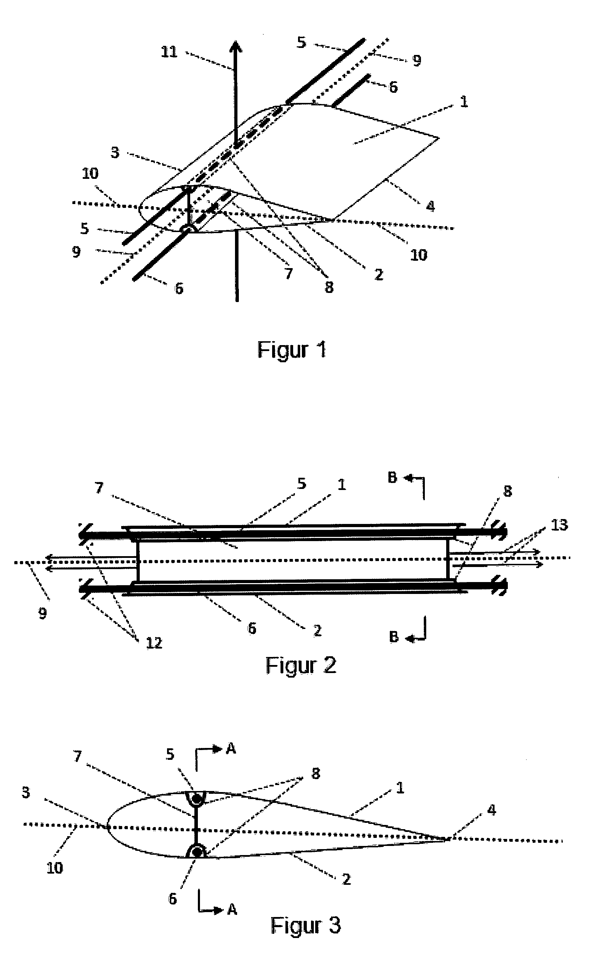

Mit (1) ist durchgehend die Oberseite des Flügels mit einer Bespannung aus flexiblem Oberflächenmaterial bezeichnet, wobei profilbestimmende Elemente wie Rippen, Latten od. dgl. nicht dargestellt sind. Die Unterseite (2) des Flügels ist ebenfalls mit einer Bespannung aus flexiblem Oberflächenmaterial versehen, wobei auch hier profilbestimmende Elemente nicht dargestellt sind. Jeder Flügel weist eine Flügelnase (3) (Anströmbereich) und eine Flügelabströmkante (4) (Hinterkante) auf. Im Inneren des Flügels ist eine obere, biegeelastische Längsstrebe (5) und eine untere ebenfalls biegeelastische Längsstrebe (6) eingesetzt, wobei die beiden Längsstreben (5, 6) durch ein flexibles, in Zugrichtung festes flächiges Spannorgan (7) wie Folie, Gewebe, Segeltuch od. dgl. miteinander verbunden sind. Das Spannorgan (7) ist mit den Längsstreben (5, 6) verbunden, wobei die Längsstreben (5, 6) mit der an der Oberseite (1) und an der Unterseite (2) vorgesehenen Bespannung fixiert sind. Diese Fixierung kann dabei durch bloßes Andrücken gegen die Spannung der Bespannung erzielt sein. Die Fixierung der Längsstreben (5, 6) an der Bespannung kann, wie in Fig. 1 dargestellt, auch mittels Taschen oder Schlaufen aus flexiblem Material (8) erfolgen.

Zur Erläuterung der auf die Flügel wirkenden Kräfte ist in Fig. 1 die Längsachse (9) und die Querachse/Profilsehne (10) sowie die Resultierende (11) der aerodynamischen Kräfte am Flügel eingezeichnet.

Grundsätzlich müssen Tragflächen (Flügel, Rotorblätter) für ihre aerodynamische Funktion genügend Formstabilität gegenüber den auftretenden Kräften des Umgebungsmediums aufweisen. Das aerodynamische Profil muss über die gesamte Flügellänge (Spannweite der Tragfläche bzw. Länge des Rotorblattes) bei allen unterschiedlichen Anströmwinkeln des Umgebungsmediums aufrechterhalten bleiben. Sowohl bei einseitig eingespannten Tragflächen (zum Beispiel am Flugzeugrumpf eingespannten Flügeln) als auch bei zweiseitig eingespannten Tragflächen (zum Beispiel am oberen und unteren Lagerpunkt einer vertikalen Windkraftmaschine) muss die Biegesteifigkeit entlang ihrer Längsachse innerhalb eines zulässigen Bereiches bleiben.

Die Biegebeanspruchung einer Tragfläche (Fig. 1) erfolgt durch aerodynamische Kräfte an der Flügelform (Auftriebskraft und Widerstandskraft). Die Resultierende der aerodynamischen Kräfte (11) liegt bei den meisten Flügelprofilen am Ende des vorderen Drittels des Profilquerschnitts und etwa im rechten Winkel zur Profilsehne (10) (d.i. die als Querachse des Flügels gedachte Linie von der Vorderkante bzw. Flügelnase (3) zur Hinterkante bzw. Abströmkante (4) des Flügels). Entlang der Längsachse (9) über die gesamte Spannweite des Flügels betrachtet können die resultierenden aerodynamischen Kräfte entlang einer gedachten Ebene normal zur Verbindungsebene zwischen Flügelnase und Flügelabströmkante gesehen werden, welche diese Flügelebene am Ende ihres vorderen Drittels schneidet. In dieser Ebene treten die größten Biegebeanspruchungen am Flügel auf.

Kern der Erfindung ist eine gemäß Patentanspruch 1 im Inneren des Flügels über die gesamte Spannweite in Ebene der resultierenden aerodynamischen Kräfte befindliches Spannorgan (Fig. 1, Fig. 2, Fig. 3) aus flexiblem, in Zugrichtung festem Material (Folie, Gewebe, Segeltuch od. dgl.) (7), welches an der Oberseite (Saugseite) des Flügels (1) und an der Unterseite (Druckseite) des Flügels (2) mit entlang der Flügellängsachse eingebrachten, drucksteifen und biegeelastischen Längsstreben (5, 6) (Stäbe, Latten od. dgl.) verbunden und in dieser Ebene eingespannt ist. Das Spannorgan mit den biegeelastischen Längsstreben ist an der Flügeloberseite und an der Flügelunterseite mit der Oberflächenbespannung des Flügels (Folie, Segel, Tuch, Gewebe od. dgl.) fixiert, wobei die Fixierung beispielsweise nur über die Haftreibung oder durch eine feste Verbindung (Naht, Verklebung, Verschweißung od. dgl.) erfolgen kann. Das Spannorgan und die biegeelastischen Längsstreben nehmen dabei die an der Tragfläche auftretenden Kräfte und Momente auf und leiten sie an die Rahmenkonstruktion der Tragfläche (zB an den Flugzeugrumpf) über die Einspannpunkte (12) des Flügels weiter. Die Anordnung aus flexiblem Spannorgan und biegeelastischen Streben bildet den Flügelholm als zentralen Längsträger und somit den tragenden Teil des Flügels. Mit (13) sind in Fig. 2 die Zugkräfte in Längsrichtung des Flügels zur Fixierung des Spannorgans angedeutet.

Eine biegeelastische Längsstrebe ist in dieser Anordnung ein stabförmiger Körper (Rundstab, Profilstab, Latte) aus beliebigem, festem Material mit geringer Biegesteifigkeit, verstanden als das Produkt aus Elastizitätsmodul des verwendeten Materials und dem Flächenträgheitsmoment der Strebe. Damit werden biegeelastische Streben von starren Streben, Balken oder Stäben unterschieden wie sie zum Beispiel bei starren Flügelholmen verwendet werden. Die Biegeelastizität einer Strebe gemäß der vorgeschlagenen Konstruktion ist erreicht, wenn eine einzelne Strebe über die der Spannweite des zu errichtenden Flügels entsprechende Länge eine mindestens 90-gradige, elastische Verbiegung zulässt. Biegeelastische Streben nehmen Zug- und Druckkräfte entlang der Strebe auf, Querkräfte der Konstruktion werden von biegeelastischen Streben nur in sehr geringem Maß aufgenommen.

Die biegeelastischen Streben werden dabei in vorgefertigte, auf das eingefügte Spannorgan aufgebrachte Taschen aus flexiblem Material (8) (Folie, Gewebe, Segeltuch od. dgl.) geführt und entlang der Flügellängsachse (9) mit dem Spannorgan durch Zug (13) zwischen den Enden der Längsstreben der Seitenkante des Spannorgans fixiert. Die biegeelastischen Streben sind an einem oder beiden Enden eingespannt und leiten die am Flügel auftretenden Kräfte und Momente über die Einspannpunkte (12) in die Rahmenkonstruktion des Flügels (Flugzeugrumpf, Segelfahrzeug, Antriebswelle der Windkraftmaschine) ein.

Die Anordnung des Flügelholms in der Ebene der resultierenden aerodynamischen Kräfte nach Patentanspruch 2 im Bereich der größten Profilstärke des Flügels am Ende des vorderen Drittels des Flügelquerschnitts leitet die Kräfte und Momente der Tragfläche an der Stelle der größten Biegebeanspruchung an die Rahmenkonstruktion der Tragfläche weiter.

Die Einspannung des Flügelholms an der Rahmenkonstruktion der Tragfläche kann nach Patentanspruch 3 so erfolgen, dass eine Vorspannung auf das Spannorgan in derjenigen Größe aufgebracht wird, dass die Längsstreben auch bei Belastung des Flügels nur mehr Drucklasten aufnehmen und das Spannorgan in Längsrichtung nur mehr Zuglasten aufnimmt.

Das aufgespannte Spannorgan mit den biegeelastischen Streben wirkt als zentraler Längsträger bzw. Flügelholm für die Tragfläche. Bei diesem Träger nehmen die biegeelastischen Streben nur mehr Druck- und Zugkräfte in Längsrichtung auf. Zugkräfte in Längsrichtung, die bei Biegebeanspruchung in Ebene der planen Fläche auftreten, werden auch durch das an die Streben gespannte Spannorgan aufgenommen. Querkräfte durch die Biegebeanspruchung des Flügels in Ebene des Spannorgans werden durch das Spannorgan wie folgt aufgenommen: In Zugrichtung ist das Spannorgan in alle Richtungen fest und nur durch seine Materialdehnung begrenzt. In Druckrichtung quer zur Längsachse der Tragfläche ist das Spannorgan nur dann fest, wenn es die zu keiner Faltenbildung an dem Element kommt, das heißt wenn das Spannorgan über die gesamte Längsachse vollständig in einer Ebene aufgespannt ist. Bei Bildung einer Längsfalte reduziert sich der Abstand zwischen der oberen und der unteren Strebe, und die Trägerkonstruktion ist in ihrer Stabilität und Festigkeit beeinträchtigt.

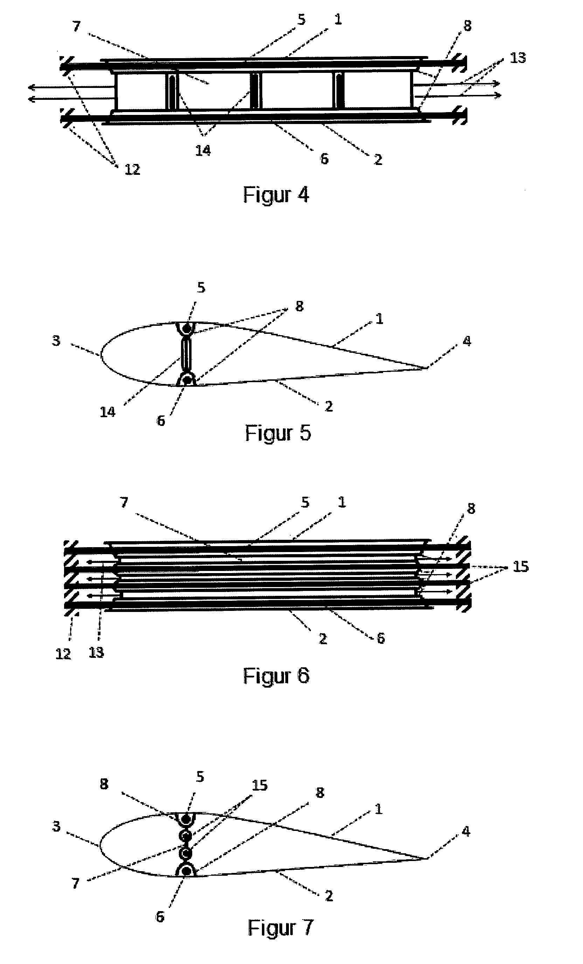

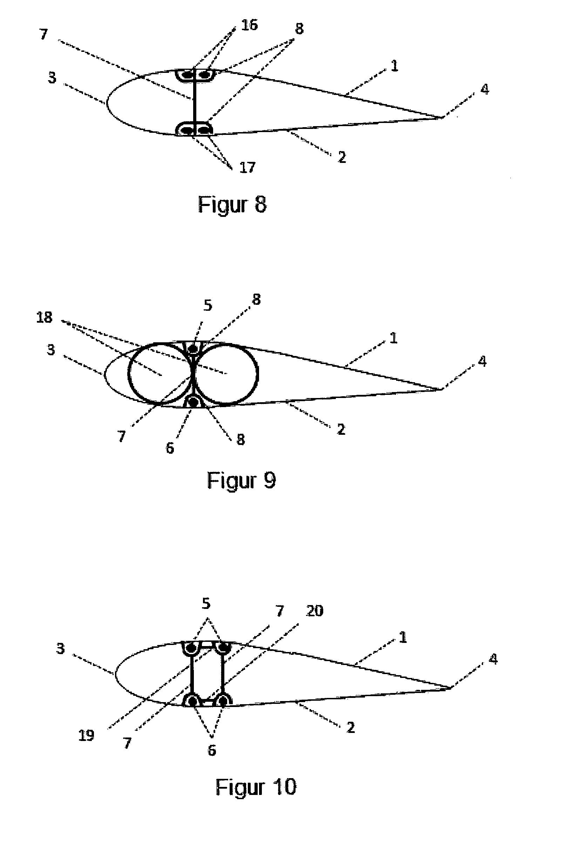

Die Faltenbildung des Spannorgans unterbleibt, wenn die Steifigkeit des Spannmaterials im Verhältnis zum Abstand zwischen zwei Streben hoch ist. Durch folgende drei Verbesserungen, die Teil dieser Erfindung sind, wird die Steifigkeit des Spannorgans im montierten Zustand erhöht:
erstens, durch einige zwischen oberer und unterer Längsstrebe in Abständen gemäß Patentanspruch 4 eingesetzte Aussteifungsstücke (14), am besten auf das Spannorgan (7) aufgesetzt oder in das Spannmaterial eingefügt. Durch diese Maßnahme wird der Abstand zwischen oberer und unterer Strebe auf dem durch die Spannflächengeometrie begrenzten Maximalabstand gehalten und Faltenbildung unterbleibt (Fig. 4, Fig. 5). Das Spannorgan lässt sich bei Entfernung der Längsstreben trotz der Aussteifungsstücke weiterhin in Längsrichtung der Tragfläche falten.
zweitens, durch zwischen oberer und unterer Längsstrebe gemäß Patentanspruch 5 parallel eingefügte weitere Streben (15), welche wie die ersteren an einem oder an beiden Enden eingespannt und durch Zug mit dem Spannorgan verbunden werden. Durch diese Maßnahme wird das Verhältnis zwischen der Materialsteifigkeit des Spannorgans und dem Abstand von zwei benachbarten Längsstreben verbessert und die Faltenbildung erschwert (Fig. 6, Fig. 7). Das Einbringen der Zwischenstäbe kann wie bei der obersten und der untersten Strebe erfolgen.
drittens, durch zwei gemäß Patentanspruch 8 seitlich am Spannorgan, in Längsrichtung der Tragfläche angebrachte, aufblasbare und mit dem Spannorgan verbundene Schläuche (18) vom etwaigen Durchmesser des Abstandes zwischen oberer und unterer Strebe (Fig. 9). Die aufgeblasenen Schläuche üben von beiden Seiten Druck auf das Spannorgan aus und hindern dieses an der seitlichen Verschiebung und somit an dessen Faltenbildung.

Die obere und die untere Längsverstrebung können gemäß Patentanspruch 6 auch so ausgeführt sein, dass entlang der Verbindungslinie zwischen Spannorgan und dem flexiblem Oberflächenmaterial auf der Oberseite des Flügels und/oder entlang der Verbindungslinie zwischen Spannorgan und dem flexiblen Oberflächenmaterial auf der Unterseite des Flügels jeweils zwei biegeelastische Längsstreben (z.B. Latten) (16, 17) eingebracht sind (Fig. 8). Die beiden Streben sind dann jeweils durch das dazwischen aufgespannte Spannorgan (7) getrennt und geben neben der Stabilität in der Richtung der resultierenden, aerodynamischen Kräfte am Flügel auch eine Versteifung in Richtung der Profilsehne.

Die biegeelastischen Längsstreben können nach Patentanspruch 7 aus mehreren Einzelteilen zusammengesetzt sein, sofern die Teilstücke mit Steckverbindungen (Kupplungen) verbunden sind, welche das Auseinanderziehen und das Zusammenschieben der benachbarten Teilstücke sowie das Knicken zwischen benachbarten Teilstücken verhindert. Durch die Anordnung aus Teilstücken können die Längsstreben für ein kompaktes Packmaß der Gesamtkonstruktion kurz gehalten werden.

Die Kombination aus oberer Längsverstrebung, unterer Längsverstrebung und dem Spannorgan kann nach Patentanspruch 9 mehrfach im Flügel ausgeführt sein. Beim Ausführungsbeispiel nach Fig. 10 sind die obere Längsstrebe (5) und die untere Längsstrebe (6) in je zwei parallel zueinander verlaufende Stäbe aufgeteilt, wobei jedes Paar aus oberer Strebe und unterer Strebe durch je ein Spannorgan (7) verbunden sind und die auf der Oberseite und der Unterseite jeweils zueinander parallel verlaufenden Stäbe gemäß Patentanspruch 10 miteinander durch Verbindungsorgane (19, 20), z.B. dem Spannorgan (7) analoge Verbindungsglieder, verbunden sind.

### Vorteil gegenüber dem Stand der Technik

Mit der gegenständlichen Erfindung kann der Flügelholm aus flexiblen Materialien gefertigt werden, nämlich mit einer Fixierungsfolie als Spannorgan und biegeelastischen Längsstreben. Das Spannorgan kann gefaltet, gerollt und platzsparend transportiert werden. Ebenso können die Längsstreben aus biegeelastischen Stäben vom Spannorgan getrennt und damit ebenfalls platzsparend transportiert werden. Gemäß Patentanspruch 7 können die Streben aus kürzeren Einzelteilen mit Kupplungen zusammengesetzt sein und damit ein noch besseres Transportmaß erreicht werden.

Gemäß Patentanspruch 3 können die Längsstreben vorgespannt werden, was zu einer besseren Aufteilung der Druck- und Zugkräfte am Holm zwischen Streben und Spannorgan führt. Dadurch kann der Holm gegenüber einem gleich starken Holm herkömmlicher Bauart gewichtssparender ausgeführt werden.

Die Anordnung nach Patentanspruch 6 nimmt neben den Biegekräften in der Längsachse des Flügels auch Verwindungskräfte (Drehmomente um die Längsachse des Flügels) auf. Diese Anordnung entspricht dem im Flugzeugbau üblichen Doppel-T-Träger als Flügelholm, welcher mit dieser Erfindung aber gänzlich mit flexiblen Materialien realisiert ist.

Andere biege- und torsionssteife Flügelholmquerschnitte wie zum Beispiel der eines Kastenprofils können realisiert werden, indem zwei Holme nach Patentanspruch 9 parallel im Inneren des Flügels eingesetzt und gemäß Patentanspruch 10 miteinander verbunden werden.

Starre Flügelholme herkömmlicher Bauart benötigen eine hohe Biegesteifigkeit und werden daher nur in einfachen Formen (gerade Rohre, H-Träger) und meist in einem Stück gefertigt. Gekrümmte Tragflächen, wie sie zum Beispiel bei Rotorblättern von vertikalen Windkraftanlagen benötigt werden, können mit einem System von starren Trägern und flexiblem Oberflächenmaterial schlecht realisiert werden. Man weicht hier auf glasfaserverstärkten Kunststoff oder glasfaserverstärkte Karbonteile aus, welche durch vorgefertigte, starre Formen den Transport und die Montage erschweren. Ein Zusammenfügen von starren Tragflächenteilen zwecks Verlängerung wirkt sich ungünstig auf die Biegefestigkeit und das Gewicht der Tragfläche aus.

Durch die geringe Biegefestigkeit der Längsstreben in der gegenständlichen Erfindung wird die Längsform der Tragfläche vor allem durch den Zuschnitt des Oberflächenmaterials und der Form des Spannorgans bestimmt. Die Bauweise einer Tragfläche mit dieser Erfindung ermöglicht entlang ihrer Längsachse beliebige Krümmungen, was aerodynamisch und statisch Vorteile gegenüber geraden Längsschnitten bringen kann. Dies ermöglicht schnell montierte, gewölbte Flügelformen in Leichtbauweise.

Die Kräfte bzw. die Biegemomente sind bei einem eingespannten Flügel in der Nähe seiner Einspannpunkte am größten. Da eine biegeelastische Strebe hauptsächlich Längskräfte aufnimmt, und da die Querkräfte bei der vorliegenden Erfindung komplett vom Spannorgan aufgenommen werden, ist eine Ausführungsform angezeigt, bei der die biegeelastischen Streben nicht in einem rechten Winkel (am Flugzeugrumpf oder am oberen und unteren Lagerpunkt einer vertikalen Windkraftmaschine) eigespannt sind, sondern in einem spitzen oder stumpfen Winkel. Eine solche Konstruktion legt eine entlang der Längsachse gewölbte Tragfläche nahe. Im Fall der Einspannung an beiden Flügelenden wie zum Beispiel am oberen und unteren Lagerpunkt einer vertikalen Windkraftanlage erfolgt die Druck- und Zugeinleitung in die Lagerungen am besten, wenn die Wölbung der Tragfläche (in diesem Fall die Durchbiegung des Rotorblattes) entweder einer Kettenlinie oder einer Parabel folgt, je nachdem ob die resultierenden Auftriebskräfte entlang der Rotorlängsachse gleichverteilt sind oder ein Auftriebsmaximum in der Längsachsenmitte der Tragfläche aufweisen.

## Patentansprüche

1. Zerlegbarer Flügelholm für, insbesondere ebenfalls zerlegbare, Tragflächen oder flügelähnliche aerodynamische Gegenstände, wie Rotorblätter für Fluggeräte oder Windkraftanlagen, wobei eine Bespannung aus flexiblem Oberflächenmaterial am Flügelholm fixiert ist und quer zur Längsrichtung des Flügelholmes verlaufende formbestimmende Elemente, wie Rippen Latten od. dgl., vorgesehen sind, **dadurch gekennzeichnet, dass** der Flügelholm wenigstens zwei an der Bespannung fixierte drucksteife, biegeelastische Längsstreben (5, 6) aufweist, von welchen eine (5) an der Flügeloberseite und die andere (6) an der Flügelunterseite im Inneren des Flügels in einer quer bzw. etwa quer zur Verbindungsebene zwischen Flügelnase (3) und Flügelabströmkante (4) verlaufenden Ebene angeordnet sind, und dass zwischen der an der Oberseite und der an der Unterseite fixierten Strebe (5, 6) ein flexibles, in Zugrichtung festes flächiges Spannorgan (7) eingespannt ist.

2. Flügelholm nach Anspruch 1, **dadurch gekennzeichnet, dass** die quer verlaufende Ebene im Bereich des Endes des vorderen Drittels des Flügelquerschnittes angeordnet ist.

3. Flügelholm nach Anspruch 1 oder 2, **dadurch gekennzeichnet, dass** das Spannorgan (7) in Längsrichtung des Flügels vorgespannt mit den Längsstreben (5, 6) verbunden sind.

4. Flügelholm nach einem der Ansprüche 1 bis 3, **dadurch gekennzeichnet, dass** zwischen den beiden Längsstreben (5, 6) in der quer verlaufenden Ebene drucksteife Aussteifungsstücke (14) eingesetzt sind.

5. Flügelholm nach einem der Ansprüche 1 bis 4, **dadurch gekennzeichnet, dass** parallel zu den Längsstreben (5, 6) verlaufende zusätzliche Streben (15) mit dem flächigen Spannorgan (7) verbunden sind.

6. Flügelhohn nach einem der Ansprüche 1 bis 5, **dadurch gekennzeichnet, dass** die Längsstreben (5, 6) in mehrere parallel angeordnete Einzelstreben (16, 17) aufgeteilt sind.

7. Flügelholm nach einem der Ansprüche 1 bis 6, **dadurch gekennzeichnet, dass** die Längsstreben (5, 6) in Längsrichtung unterteilt sind, wobei die Teilstücke über druckfeste und biegesteife Kupplungen verbunden sind.

8. Flügelholm nach einem der Ansprüche 1 bis 7, **dadurch gekennzeichnet, dass** an jeder Seite des Spannorgans (7) ein aufblasbarer, das Spannorgan seitlich berührender in Längsrichtung des Holmes verlaufender Schlauch (18) mit einem Durchmesser angeordnet ist, der etwa dem Abstand zwischen der oberen (5) und der unteren (6) Strebe entspricht.

9. Flügelholm nach einem der Ansprüche 1 bis 8, **dadurch gekennzeichnet, dass** die Kombination aus oberer Längsstrebe (5), Spannorgan (7) und unterer Längsstrebe (6) mehrfach parallel zueinander vorgesehen ist, wobei gegebenenfalls je Spannorgan (7) zwei obere (5) und zwei untere (6) Längsstreben vorgesehen sind, wobei je eine davon auf der einen Seite und die andere auf der anderen Seite des Spannorgans angeordnet ist.

10. Flügelholm nach Anspruch 9, **dadurch gekennzeichnet, dass** die parallel zueinander angeordneten Kombinationen aus oberer Längsstrebe (5), unterer Längsstrebe (6) und Spannorgan (7) durch zusätzliche Verbindungsorgane (19, 20) miteinander verbunden sind.
